# EUROPÄISCHE PATENTANMELDUNG

(11) **EP 1 387 058 A2**
(43) Veröffentlichungstag der Anmeldung: **04.02.2004**
(21) Anmeldenummer: 03015849.7
(22) Anmeldetag: 11.07.2003
(51) Int. Cl.: F02B 37/013, F02B 37/18, F02B 37/24, F02D 41/00

(54) **Verfahren zur Ladedruckregelung eines Verbrennungsmotors**

(30) Priorität: 03.08.2002 DE 10235531
(71) Anmelder: DaimlerChrysler AG, 70567 Stuttgart (DE)
(72) Erfinder: Heinl, Ulrich, 68199 Mannheim (DE); Weber, Siegfried, 70619 Stuttgart (DE)

(57) **Zusammenfassung**

Die Erfindung betrifft ein Verfahren zur Ladedruckregelung eines Verbrennungsmotors (1) mit einem ersten Abgasturbolader (2), einem zweiten Abgasturbolader (3), einem ersten Stellglied (6), insbesondere einer Abgasumlenkklappe, welches eine Abgaszufuhr zu einem oder zu beiden Abgasturboladern (2, 3) einstellt, und einem zweiten Stellglied (8), insbesondere eine Waste-Gate-Klappe, welche in einem dem zweiten Abgasturbolader (3) zugeordneten Waste-Gate (9) angeordnet ist, wobei zwischen einer Ansteuerung des ersten Stellglieds (6) und einer Ansteuerung des zweiten Stellglieds (8) umgeschaltet wird.

## Beschreibung

Die Erfindung betrifft ein Verfahren zur Ladedruckregelung eines Verbrennungsmotors mit einem ersten und einem zweiten Abgasturbolader.

Aus der Offenlegungsschrift DE 100 19 774 A1 ist eine Turboladereinrichtung für einen Verbrennungsmotor bekannt, die zwei Abgasturbolader aufweist, deren Turbinen vom Abgas der Brennkraftmaschine antreibbar sind und deren Verdichter Verbrennungsluft der Brennkraftmaschine auf einen erhöhten Ladedruck komprimieren. Im Strömungsweg des Abgases ist ein Stellorgan bzw. ein Stellglied zur Einstellung der Zufuhr von Abgas zu einer Turbine oder zu beiden Turbinen angeordnet.

Aus der gattungsgemäßen Offenlegungsschrift DE 198 37 978 A1 ist ein Verbrennungsmotor mit zweistufiger Aufladung bekannt, wobei in einer Turboladergruppe eine Hochdruckstufe und eine Niederdruckstufe in Reihe geschaltet sind. Es ist eine Bypassleitung zum Überbrücken einer Turbine der Hochdruckstufe, eine Bypassleitung zum Überbrücken einer Turbine der Niederdruckstufe und eine Bypassleitung zum Überbrücken eines Verdichters der Hochdruckstufe vorgesehen. Den Bypassleitungen sind Rohrschalter, Klappen und/oder Ventile zugeordnet. Die Turbine der Niederdruckstufe kann mit variabler Turbinengeometrie ausgeführt sein.

Mit zunehmendem Abgasstrom des Verbrennungsmotors drehen die Turbinen mit höherer Drehzahl. Dies hat eine Erhöhung des Ladedrucks, d.h. des Drucks, mit dem Luft in den Brennraum des Verbrennungsmotors geschoben wird, zur Folge. Diese Erhöhung des Ladedrucks bewirkt infolge eines erhöhten Luftdurchsatzes eine höhere Leistungsdichte bei gleichbleibendem Hubraum und gleichbleibender Motordrehzahl. Um eine Begrenzung des Ladedrucks zu gewährleisten, können den Bypassleitungen zugeordnete Stellglieder, Klappen, Ventile bzw. Rohrschalter geöffnet werden, so dass die Abgase ungenutzt an den Turbinen der Turbolader vorbeigeführt werden. Alternativ oder zusätzlich kann die Turbine der Niederdruckstufe mit variabler Turbinengeometrie ausgeführt sein. Sie liefert dann infolge der besseren Nutzung der gesamten Abgasenergie über ein breites Drehzahlband einen gleichmäßigen Ladedruck. Eine variable Turbinengeometrie kann über verstellbare Leitschaufeln und/oder verstellbare Schieber erreicht werden. Die Ansteuerung der Stellglieder bzw. Rohrschalter erfolgt mittels einer zentralen Prozesseinheit, in welcher eine Ladedruckregelung integriert ist.

Die Ladedruckregelung dient der Bereitstellung eines Sollwerts für den Ladedruck am jeweiligem Betriebspunkt des Verbrennungsmotors. Nach messtechnischer Erfassung eines momentan vorliegenden Ladedrucks (Ist-Wert) wird eine Regelabweichung als Differenz zwischen dem Sollwert und dem Istwert ermittelt. Diese Differenz wird durch Veränderung einer entsprechenden Stellgröße mittels eines Reglers minimiert. Eine Stellgröße ist eine Größe, mit welcher ein Stellglied angesteuert wird, beispielsweise ein Rohrschalter oder ein Ventil in einer Bypassleitung einer Turbine eines Abgasturboladers. Die Minimierung der Regelabweichung hat zur Folge, dass der Istwert des Ladedrucks dem Sollwert des Ladedrucks nachgeregelt wird.

Bei Verbrennungsmotoren mit zwei- bzw. mehrstufiger Aufladung, denen also zwei oder mehr Abgasturbolader auf der Frischluftseite vor- und auf der Abgasseite nachgeschaltet sind, sind mehrere Regler erforderlich, damit für die entsprechenden Stellglieder der Abgasturbolader je eine Stellgröße generiert wird.

Es ist Aufgabe der Erfindung, eine Ladedruckregelung für einen Verbrennungsmotor mit zweistufiger Aufladung zu schaffen, welcher eine einfache Struktur aufweist.

Diese Aufgabe wird durch die Merkmale des unabhängigen Patentanspruchs gelöst.

Das erfindungsgemäße Verfahren dient der Ladedruckregelung eines Verbrennungsmotors mit einem ersten Abgasturbolader, einem zweiten Abgasturbolader, einem ersten Stellglied, welches eine Abgaszufuhr zu einem oder zu beiden Abgasturboladern einstellt und einem zweiten Stellglied, welches einer Einstellung eines Abgasflusses über den zweiten Abgasturbolader dient. Erfindungsgemäß wird bei der Ladedruckregelung zwischen einer Ansteuerung des ersten Stellglieds und einer Ansteuerung des zweiten Stellglieds hin- und hergeschaltet bzw. umgeschaltet. Unter einer Regelung sei auch eine Steuerung verstanden, das heißt eine Regelung ohne Rückkopplung des Istwerts des Ladedrucks.

Das erfindungsgemäße Verfahren kann bei Otto-Motoren und bei Dieselmotoren eingesetzt werden. Es kann ebenfalls bei ein-, zwei- oder mehrflutig ausgeführten Turbinen der Abgasturbolader verwendet werden. Unter einem Stellglied sei beispielsweise ein Ventil, ein Rohrschalter, eine Leitschaufel, ein Schieber oder eine Klappe verstanden. Die Stellglieder sind verstellbar ausgeführt. Der erste und der zweite Abgasturbolader können unterschiedlich, insbesondere unterschiedlich groß, ausgeführt sein.

Wegen der erfindungsgemäßen Umschaltung zwischen dem ersten und dem zweiten Stellglied ist der Einsatz eines einzigen Ladedruckreglers ausreichend. Für das zweite Stellglied braucht kein eigener Regler vorgesehen zu sein. Hierdurch können Speicherplatz in einem Steuergerät, Entwicklungszeit für einen zusätzlichen Regler und Kosten eingespart werden. Standardmäßige Ladedruckregler können ohne Erweiterung eingesetzt werden.

In Ausgestaltung der Erfindung erfolgt die Umschaltung zwischen den Stellgliedern gefiltert, d.h. es erfolgt ein fließender Übergang von der Ansteuerung des einen Stellglieds zu der Ansteuerung des anderen Stellglieds. Hierdurch kann auch bei schnellen Last- und Drehzahländerungen des Verbrennungsmotors Fahrkomfort sichergestellt werden. Unstetiges Beschleunigungsund Bremsleistungsverhalten wird vermieden.

Das erfindungsgemäße Verfahren kann auf einfache Weise in eine Motorsteuerung bzw. ein Steuergerät und/oder eine Prüfstandssoftware integriert werden und benötigt wenig Speicherbedarf.

Weitere vorteilhafte Ausgestaltungen der Erfindung ergeben sich aus den Unteransprüchen und aus den anhand der Zeichnung nachfolgend dargestellten Ausführungsbeispielen. Es zeigen:
- Fig. 1: eine schematische Darstellung der Abgas- und Frischgasführung eines Verbrennungsmotors mit zweistufiger Aufladung und Bypassleitungen,
- Fig. 2: eine schematische Darstellung der Ansteuerung der Stellglieder für die Abgasturbolader und
- Fig. 3: eine grafische Darstellung einer Filterung eines Ansteuersignals bei der Umschaltung vom einen zum anderen Stellglied.

Werden in den Figuren gleiche Bezugszeichen verwendet, so kennzeichnen diese funktionell gleiche Komponenten bzw. Funktionseinheiten.

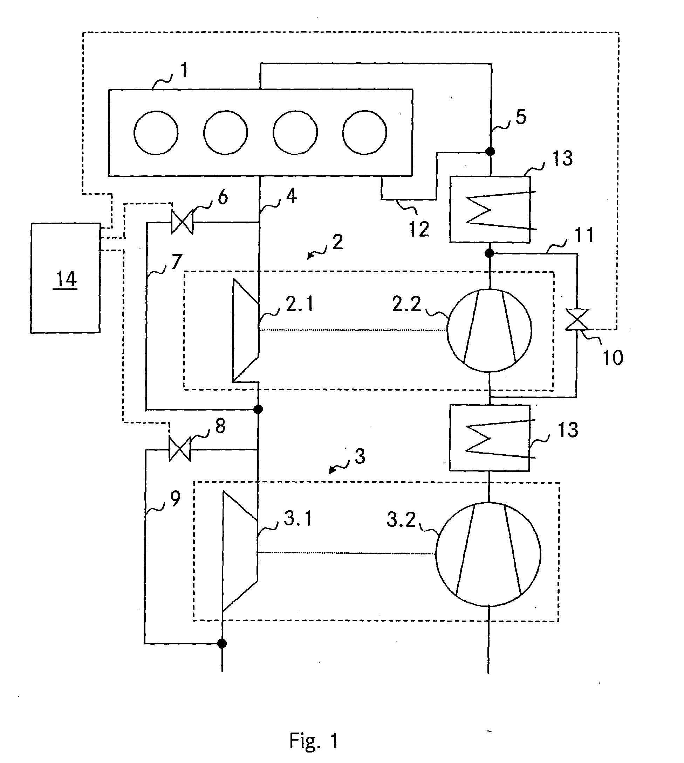

Fig. 1 zeigt eine schematische Darstellung der Abgas- und Frischgasführung eines Verbrennungsmotors 1 mit zweistufiger Aufladung 2, 3 und mit Bypassleitungen 7, 9, 11. Die zweistufige Aufladung erfolgt durch einen ersten Abgasturbolader 2 und durch einen zweiten Abgasturbolader 3. Die Abgasturbolader 2, 3 bestehen jeweils aus einer Turbine 2.1 bzw. 3.1 und einem Verdichter 2.2 bzw. 3.2. Die Abgasturbolader 2, 3 sind in Reihe geschaltet, wobei der Abgasturbolader 2 zwischen dem Verbrennungsmotor 1 und dem Abgasturbolader 3 angeordnet ist. Die Verdichter 2.2 und 3.2 sind in der Frischgaszuführung 5 des Verbrennungsmotors 1 angeordnet. Die Turbinen 2.1 und 3.1 sind in der Abgasführung bzw. im Abgaszweig 4 des Verbrennungsmotors 1 angeordnet. Die Turbine 2.1 ist vorzugsweise als Hochdruckturbine und die Turbine 3.1 ist vorzugsweise als Niederdruckturbine ausgeführt.

Über die von der Turbine 2.1 und von der Turbine 3.1 angetriebenen Verdichter 2.2 und 3.2 wird Frischluft bzw. Frischgas verdichtet, welches in Ladeluftkühlern 13, welche bevorzugterweise in der Frischgasführung 5 vorgesehen sind, abgekühlt werden kann. Die Ladeluftkühler 13 sind vorzugsweise zwischen Verbrennungsmotor 1 und Verdichter 2.2 und zwischen Verdichter 2.2 und Verdichter 3.2 vorgesehen. Der funktionale Zusammenhang zwischen den Turbinen 2.1 und 3.1 und den Verdichtern 2.2 und 3.2 ist in der Fig. 1 durch je eine gepunktete Linie verdeutlicht. Die Turbine 2.1 und der Verdichter 2.2 sind vorzugsweise auf einer gemeinsamen Welle angeordnet. Ebenso sind die Turbine 3.1 und der Verdichter 3.2 vorzugsweise auf einer gemeinsamen Welle angeordnet.

Den Turbinen 2.1 und 3.1 ist je eine Bypassleitung 7 bzw. 9 zugeordnet. Die Bypassleitungen 7, 9 dienen der Überbrückung bzw. Umgehung der Turbinen 2.1 und 3.1. In der Bypassleitung 7 ist ein erstes Stellglied 6 angeordnet. Die Bypassleitung 9 ist mit einem zweiten Stellglied 8 versehen. Das erste Stellglied 6 ist vorzugsweise als Klappe, insbesondere als Abgasumlenkklappe, bzw. als Ventil, insbesondere als Abgasumlenkventil, ausgeführt.

Die Bypassleitung 9 entspricht vorzugsweise einem Waste-Gate, welcher die Abgase an der Turbine 3.1 des zweiten Abgasturboladers 3 vorbei ungenutzt in eine Abgasanlage des Verbrennungsmotors, z. B. in einen Schalldämpfer eines Auspuffs, führt. Das zweite Stellglied 8 ist vorzugsweise als Waste-Gate-Ventil bzw. Waste-Gate-Klappe ausgeführt. Alternativ bzw. zusätzlich zur Bypassleitung 9 kann die Turbine 3.1 des zweiten Abgasturboladers 3 mit variabler Turbinengeometrie ausgeführt sein. Hierfür sind der Turbine 3.1 vorzugsweise verstellbare Leitschaufeln und/oder verstellbare Schieber zugeordnet. Selbstverständlich kann auch die Turbine 2.1 des ersten Turboladers 2 eine variable Turbinengeometrie aufweisen. Durch eine variable Turbinengeometrie kann das Ansprechen eines Abgasturboladers bei geringen Drehzahlen verbessert werden. Turbinen mit variabler Turbinengeometrie liefern über ein breites Drehzahlband einen gleichmäßigen Ladedruck. Ist die Turbine 3.1 mit variabler Turbinengeometrie ausgeführt, so entsprechen verstellbare Leitschaufeln beziehungsweise ein verstellbarer Schieber einem zweiten Stellglied 8.

Dem Verdichter 2.2 des ersten Abgasturboladers 2 ist bevorzugterweise eine Bypassleitung 11 zugeordnet. Diese Bypassleitung 11 ist mit einem dritten Stellglied 10 versehen. Durch die Bypassleitung 11 kann ein Teil des Frischgasstroms am Verdichter 2.2 vorbeigeleitet werden, wodurch sich ein zusätzlicher Freiheitsgrad für die Regelung bzw. Steuerung der Ladeluft ergibt.

Vor allem bei kleinvolumigen Motoren, insbesondere Verbrennungsmotoren für Personenkraftwagen, führt die Bypassierung bzw. Umgehung des Abgasturboladers 2 zu deutlichen Verbesserungen bezüglich Motorleistung, Kraftstoffverbrauch und Emissionen im oberen Drehzahlbereich.

Es ist vorzugsweise eine Abgasrückführleitung 12 vorgesehen, über die Abgas vom Verbrennungsmotor 1 in die Frischgasführung 5 eingespeist werden kann. Die Einspeisung erfolgt bevorzugterweise zwischen dem Verbrennungsmotor 1 und dem Ladelüftkühler 13, welcher stromab des Verdichters 2.2 angeordnet ist.

Die Abgasturbolader 2 und 3 können jeweils in einem eigenen Gehäuse oder in einem gemeinsamen Gehäuse integriert sein. Die Bypassleitungen 7, 9 und 11 können ebenfalls in diesen Gehäusen integriert sein.

Die Stellglieder 6, 8 und 10 können über eine Steuereinheit 14 angesteuert werden. Bei der Steuereinheit 14 kann es sich um ein im Fahrzeug integriertes Steuergerät handeln. Bei Anwendungen im Versuch bzw. auf dem Prüfstand kann es sich auch um eine Steuereinheit in einem externen Rechner, insbesondere einem externen Bypassrechner handeln. Die Ansteuerung der Stellglieder 6, 8 und 10 erfolgt bevorzugterweise in Abhängigkeit von Betriebsgrößen des Verbrennungsmotors.

Die beiden Abgasturbolader 2 und 3 können unterschiedlich groß mit unterschiedlich hohem Massendurchsatz ausgebildet sein. Der erste Abgasturbolader 2 ist vorzugsweise als Hochdruckstufe und der zweite Abgasturbolader 3 ist vorzugsweise als Niederdruckstufe ausgebildet. Die Ansteuerung des ersten Stellglieds 6 erfolgt bevorzugterweise derart, dass im unteren Drehzahlbereich des Verbrennungsmotors 1 Abgas sowohl den ersten Abgasturbolader 2 als auch den zweiten Abgasturbolader 3 durchströmt, während bei steigender Drehzahl das Abgas bei offenem ersten Stellglied 6 über die Bypassleitung 7 zur Turbine 3.1 des zweiten Abgasturboladers 3 geleitet wird. Das Abgas durchströmt dann primär den zweiten Abgasturbolader 3. Bei offenem ersten Stellglied 6 kann durch eine Ansteuerung des zweiten Stellglieds 8 Abgas an der Turbine 3.1 des zweiten Abgasturboladers vorbeigeleitet werden. Hierdurch läßt sich die Vorverdichtung durch den Verdichter 3.2 auf ein gewünschtes Maß begrenzen. Hierdurch lassen sich unerwünschte Temperaturen und/oder Spitzen- bzw. Zylinderdrücke vermeiden. Dies ist insbesondere bei Ausführungsformen ohne Ladelüftkühler 13 vorteilhaft. Wird, vorzugsweise im unteren Drehzahlbereich, Abgas über den ersten Abgasturbolader 2 und über den zweiten Abgasturbolader 3 gleitet, so ist das zweite Stellglied 8 geschlossen, so dass kein Abgasstrom über die Bypassleitung 9 fließt.

Bei offenem ersten Stellglied 6, d.h. bei Regelung des Ladedrucks über das zweite Stellglied 8, erfolgt vorzugsweise eine Bypassierung des Verdichters 2.2 des ersten Abgasturboladers 2 mittels eines offenen dritten Stellglieds 10. Fließt dahingegen kein Abgasstrom über die Bypassleitung 9, sondern fließt der Abgasstrom über beide Turbinen 2.1 und 3.1 (d.h. der Ladedruck wird allein über das erste Stellglied geregelt), so wird das Frischgas über den Verdichter 2.2 geführt und nicht durch die Bypassleitung 11. Das dritte Stellglied 10 verschließt die Bypassleitung 11.

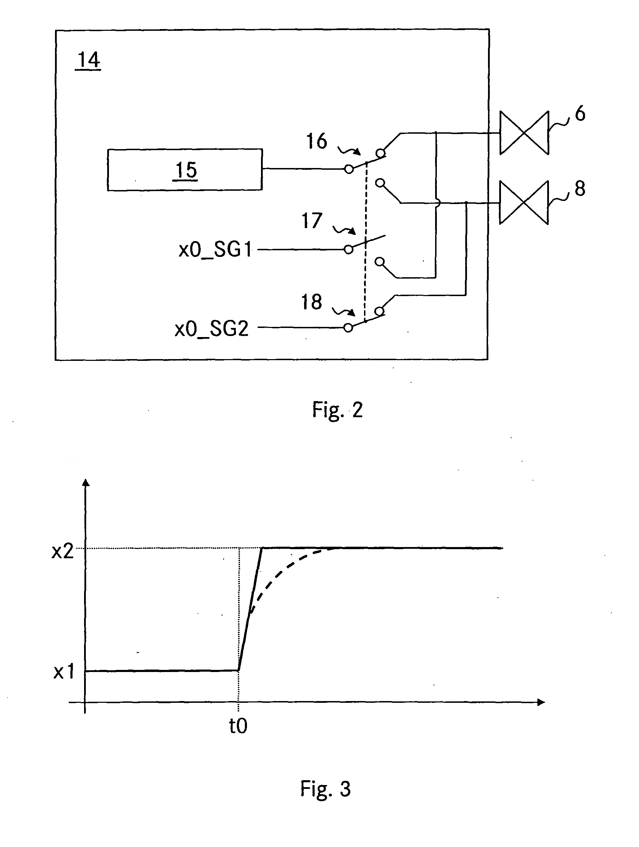

Die Regelung des Ladedrucks erfolgt also entweder über eine Ansteuerung des ersten Stellglieds 6 oder über eine Ansteuerung des zweiten Stellglieds 8. Die jeweils nicht angesteuerten Stellglieder 6, 8 nehmen vorbestimmte Zustände ein. Fig. 2 enthält eine schematische Darstellung der Ansteuerung der Stellglieder 6 und 8 bzw. des Signalflusses zu den Stellgliedern 6 und 8 für die Steuerung der Abgasströme über die Abgasturbolader 2 und 3. Steuert ein vorzugsweise in einer Steuereinheit 14 integrierter Ladedruckregler 15 über einen vorzugsweise softwaremäßig realisierten Schalter 16 das erste Stellglied 6 an (Abgas soll sowohl über die Turbine 2.1 als auch über die Turbine 3.1 strömen), so nimmt das zweite Stellglied 8 mittels einem geschlossenen, vorzugsweise softwaremäßig realisierten Schalter 18 den vorbestimmten Zustand x0_SG2 ein. Der Zustand x0_SG2 bedeutet ein geschlossenes zweiten Stellglied 8 beziehungsweise ein die Bypassleitung 9 sperrendes zweites Stellglied 8. Ein vorzugsweise softwaremäßig realisierter Schalter 17, durch welchen das Stellglied 6 in einen vorbestimmter Zustand x0_SG1 geschaltet werden kann, ist geöffnet. Das dritte Stellglied 10 befindet sich bei einer Ansteuerung des ersten Stellglieds 6 vorzugsweise in demselben Zustand wie das zweite Stellglied 8, d.h. es ist geschlossen bzw. es verhindert einen Frischgasstrom über die Bypassleitung 11.

Soll hingegen, beispielsweise bei einer Drehzahl des Verbrennungsmotors 1, welche in einem Steuergerät hinterlegte Kenndaten überschritten hat, der Abgasstrom hauptsächlich über die Turbine 3.1 des zweiten Abgasturboladers 3 strömen, so steuert der Regler 15 über den Schalter 16 das zweite Stellglied 8 an und nicht das erste Stellglied 6. Bei den hinterlegten Kenndaten kann es sich beispielsweise um einen Grenzwert, um eine Kennlinie bzw. um ein Kennfeld handeln, welche bevorzugterweise von einer Drehzahl des Verbrennungsmotors und/oder von einer Einspritzmenge abhängig sind. Gleichzeitig mit der Umschaltung des Schalters 16 erfolgt eine Umschaltung des Schalters 17 und des Schalters 18. Das heisst, dass das zweite, nun angesteuerte Stellglied 8, nicht den vorbestimmten Zustand x0_SG2 einnimmt, sondern dass stattdessen das erste Stellglied 6 den vorbestimmten Zustand x0_SG1 einnimmt. Der Zustand x0_SG1 bedeutet, dass das erste Stellglied 6 offen ist, d.h. dass Abgas ungehindert über die Bypassleitung 7 strömen kann. Der Schalter 18, durch welchen das Stellglied 8 in einen vorbestimmter Zustand x0_SG2 geschaltet werden kann, ist geöffnet. Bei der Ansteuerung des zweiten Stellglieds 8 befindet sich bevorzugterweise das dritte Stellglied 10 in demselben Zustand wie das erste Stellglied 6, d.h. es ist vollständig geöffnet bzw. verschließt die Bypassleitung 11 nicht, so dass Frischluft ungehindert anstatt über den Verdichter 2.2 durch die Bypassleitung 11 strömen kann.

Die gegenseitige Abhängigkeit der Ansteuerung der Stellglieder 6, 8 bzw. der vorzugsweise softwaretechnisch realisierten Stellungen der Schalter 16, 17 und 18 ist in der Fig. 2 durch eine gestrichelte Linie angedeutet.

Die durch die Schalter 16, 17 und 18 symbolisierte Umschaltung zwischen einer Ansteuerung des ersten Stellglieds 6 und einer Ansteuerung des zweiten Stellglieds 8 durch den Regler 15 ist vorzugsweise softwaretechnisch realisiert und in einer Steuereinheit eines Fahrzeugsteuergeräts bzw. eines Prüfstands integriert. Die durch die Schalter 16, 17 und 18 symbolisierte Umschaltung benötigt wenig Speicherkapazität und Programmieraufwand.

Um zu verhindern, dass bei der Umschaltung des Reglers 15 bzw. des Reglerausgangssignals, auch als Stellgröße bzw. Ansteuersignal bezeichnet, von einem Stellglied 6, 8 auf das andere Stellglied 8, 6 kein Sprung in der Stellgröße bzw. im Ansteuersignal auftritt, wird die Stellgröße bei der Umschaltung bevorzugterweise gefiltert. Die Filterung erfolgt vorzugsweise mittels eines sogenannten Integrators bzw. einer Rampenfunktion und/oder mittels eines Verzögerungsglieds n-ter Ordnung, einer sog. PTₙ-Funktion bzw. eines PTₙ-Glieds, wobei n bevorzugterweise gleich Eins ist (Verzögerungsglied erster Ordnung bzw. PT₁-Glied). Die Filter sind vorzugsweise Teil des Ladedruckreglers 15 und in der Steuereinheit 14 softwaretechnisch hinterlegt. In der Fig. 3 ist eine Filterung der Stellgröße bei der Umschaltung von einem Stellglied zum anderen Stellglied grafisch dargestellt. Die Umschaltung erfolgt zu einem Zeitpunkt t0. Der Wert x1 repräsentiert den Wert der Stellgröße vor der Umschaltung und der Wert x2 repräsentiert den Wert der Stellgröße nach der Umschaltung. Ohne Filterung hätte die Stellgröße den Verlauf einer Sprungfunktion, wobei der Sprung zum Zeitpunkt t0 auftritt. Das Auftreten einer solchen Sprungfunktion kann zu einer Beeinträchtigung des Fahrkomforts führen. Durch die Filterung erfolgt der Übergang von dem Wert x1 zum Wert x2 geglättet bzw. fließend. Bei der Filterung mit einer Rampenfunktion bzw. mit einem Integrator erhält man eine Stellgröße, deren Verlauf dem Verlauf der in der Fig. 3 dargestellten durchgezogenen Kurve entspricht. Bei der Filterung mit einem Verzögerungsglied erhält die Stellgröße einen Verlauf, welcher dem Verlauf der gestrichelten Kurve in der Fig. 3 ähnelt, d.h. einen exponentiellen Verlauf. Die in der Fig. 3 dargestellten Kurvenverläufe sind selbstverständlich beispielhaft.

Die Ansteuerung der Stellglieder 6, 8, 10 erfolgt in der Regel über Tastverhältnisse. Der Arbeitsbereich, den ein Stellglied maximal abdecken kann, wird hierzu in 100 Teile aufgeteilt. Ein Tastverhältnis von 1% bedeutet dabei, dass ein Stellglied z.B. minimal angesteuert wird, während ein Tastverhältnis von 100% eine maximale Ansteuerung bezeichnet. Die Einteilung von Tastverhältnissen kann je nach Ausführung des Stellglied auch hiervon abweichen. Es kann beispielsweise auch eine invertierte Funktionsweise vorliegen, d.h. dass ein Tastverhältnis von 1% einer maximalen Ansteuerung und ein Tastverhältnis von 100% einer minimalen Ansteuerung entspricht.

## Patentansprüche

1. Verfahren zur Ladedruckregelung eines Verbrennungsmotors (1) mit
- einem ersten Abgasturbolader (2),
- einem zweiten Abgasturbolader (3),
- einem ersten Stellglied (6), welches eine Abgaszufuhr zu einem oder zu beiden Abgasturboladern (2, 3) einstellt, und
- einem zweiten Stellglied (8), welches einer Einstellung eines Abgasflusses über den zweiten Abgasturbolader (3) dient,
**dadurch gekennzeichnet, dass**
zwischen einer Ansteuerung des ersten Stellglieds (6) und einer Ansteuerung des zweiten Stellglieds (8) umgeschaltet wird.

2. Verfahren nach Anspruch 1,
**dadurch gekennzeichnet, dass**
die Umschaltung in Abhängigkeit von einer Kenngröße bzw. Kenndaten und/oder einer Betriebsgröße des Verbrennungsmotors (1) erfolgt.

3. Verfahren nach Anspruch 1,
**dadurch gekennzeichnet, dass**
bei einer Ansteuerung des ersten Stellglieds (6) das zweite Stellglied (8) einen bestimmten Zustand (x0_SG2) einnimmt und dass bei einer Ansteuerung des zweiten Stellglied (8) das erste Stellglied (6) einen bestimmten Zustand (x0_SG1) einnimmt.

4. Verfahren nach Anspruch 1,
**dadurch gekennzeichnet, dass**
bei einer Ansteuerung des zweiten Stellglieds (8) ein Verdichter (2.2) des ersten Abgasturboladers (2) überbrückt wird.

5. Verfahren nach Anspruch 1,
**dadurch gekennzeichnet, dass**
bei einer Umschaltung vom einen zum anderen Stellglied (2, 3) eine Stellgröße gefiltert wird.

6. Verfahren nach Anspruch 5,
**dadurch gekennzeichnet, dass**
die Filterung mittels Integration und/oder Verzögerung der Stellgröße erfolgt.

7. Verfahren nach Anspruch 1,
**dadurch gekennzeichnet, dass**
das erste Stellglied (6) zwischen dem Verbrennungsmotor (1) und einer Turbine (3.1) des zweiten Abgasturboladers (3) angeordnet ist.

8. Verfahren nach Anspruch 1,
**dadurch gekennzeichnet, dass**
das zweite Stellglied (8) in einer Bypassleitung (9) angeordnet ist, welche einer Turbine (3.1) des zweiten Abgasturboladers (3) zugeordnet ist.

9. Verfahren nach Anspruch 1,
**dadurch gekennzeichnet, dass**
der zweite Abgasturbolader (3) eine variable Turbinengeometrie aufweist.

10. Verfahren nach Anspruch 1,
**dadurch gekennzeichnet, dass**
als erstes Stellglied (6) eine Abgasumlenkklappe verwendet wird, welche in einer dem ersten Abgasturbolader (2) zugeordneten Bypassleitung (7) angeordnet ist, dass als zweites Stellglied (8) eine Waste-Gate-Klappe verwendet wird, welches in einem dem zweiten Abgasturbolader (3) zugeordneten Waste-Gate (9) angeordnet ist, und dass bei einer Ansteuerung der Abgasumlenkklappe (6) die Waste-Gate-Klappe (8) das Waste-Gate (9) sperrt, und dass bei einer Ansteuerung des Waste-Gate-Ventils (8) die Abgasumlenkklappe (6) einen ungehinderten Abgasstrom über die Bypassleitung (7) ermöglicht.
